# DEMANDE DE BREVET EUROPEEN

(11) **EP 1 172 385 A1**
(43) Date de publication de la demande: **16.01.2002**
(21) Numéro de dépôt: 00202554.2
(22) Date de dépôt: 14.07.2000
(51) Int. Cl.: C08F 110/02, C08F 4/70, C08F 4/605

(54) **Procédé pour la polymérisation des alpha-oléfines**

(71) Demandeur: SOLVAY POLYOLEFINS EUROPE - BELGIUM (Société Anonyme), 1050 Bruxelles (BE)
(72) Inventeur: Radhakrishnan, Karunakaran, 33600 Pessac (FR); Cramail, Henri, 33350 Sainte Pierre (FR); Deffieux, Alain, 33000 Bordeaux (FR); François, Philippe, 1490 Court-Saint-Etienne (BE); Momtaz, Ardechir, 1180 Bruxelles (BE)
(74) Mandataire: Destryker, Elise Martine

(57) **Abrégé**

Procédé de polymérisation d'alpha-oléfines dans lequel on met en contact, dans des conditions polymérisantes, au moins une alpha-oléfine avec un système catalytique comprenant
(a) un complexe catalytique à base d'un métal de transition (M) des groupes 6 à 12,
(b) un aluminoxane, et
(c) une boroxine représentée par la formule (I) 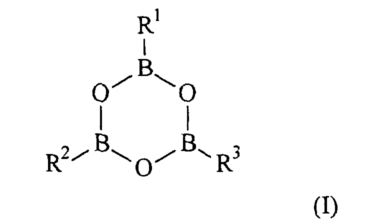 dans laquelle R¹ à R³ représentent chacun, de manière indépendante, un groupe alkyle, cycloalkyle, alkoxy, ou aryle, éventuellement substitué.

## Description

La présente invention concerne un procédé pour la polymérisation des alpha-oléfines.

Il est connu de polymériser les alpha-oléfines au moyen de complexes catalytiques comprenant un composé de métal de transition et un ligand bi- ou tridentate, et un aluminoxane (WO 96/23010). La demande de brevet WO 98/27124 décrit un procédé de polymérisation de l'éthylène au moyen d'un système catalytique comprenant un complexe catalytique à base de fer ou de cobalt avec des pyridinebis(imines) et du méthylaluminoxane. Un tel procédé conduit à des polyéthylènes ayant une largeur de distribution des poids moléculaires extrêmement large, et comprenant une fraction de polyéthylène de bas poids moléculaire. Ces bas poids moléculaires peuvent être à l'origine de fractions solubles indésirables.

On a maintenant trouvé un procédé de polymérisation qui ne présente pas les inconvénients précités.

A cet effet, la présente invention concerne un procédé de polymérisation d'alpha-oléfines dans lequel on met en contact, dans des conditions polymérisantes, au moins une alpha-oléfine avec un système catalytique comprenant
(a) un complexe catalytique à base d'un métal de transition (M) des groupes 6 à 12,
(b) un aluminoxane, et
(c) une boroxine représentée par la formule (I) 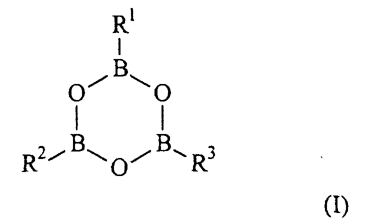
dans laquelle R¹ à R³ représentent chacun, de manière indépendante, un groupe alkyle, cycloalkyle, alkoxy ou aryle, éventuellement substitué.

Toutes les références au Tableau Périodique des Eléments réfèrent à la version publiée dans CRC Handbook of Chemistry and Physics, 77th Edition, 1996/97; la notation utilisée est la nouvelle notation des groupes par IUPAC.

Selon la présente invention, on entend désigner par alpha-oléfines, les oléfines à insaturation terminale contenant de 2 à 20, de préférence de 2 à 8, atomes de carbone. Des exemples de telles alpha-oléfines sont l'éthylène, le propylène, le 1-butène, le 1-pentène, le 1-hexène, le 1-octène. Il va de soi que outre l'oléfine, un autre monomère copolymérisable avec l'alpha-oléfine peut être mis en oeuvre dans le procédé selon l'invention.

Le complexe catalytique (a) mis en oeuvre dans la présente invention comprend au moins un métal de transition (M) choisi parmi les éléments des groupes 6 à 12 du Tableau Périodique. Le métal de transition (M) utilisable selon la présente invention est le plus souvent choisi parmi les métaux de transition des groupes 8 à 10. Le métal de transition préféré est le fer.

Les complexes catalytiques (a) utilisables selon la présente invention contiennent en général au moins deux hétéroatomes et sont le plus souvent choisis parmi les molécules représentées par la formule (II) 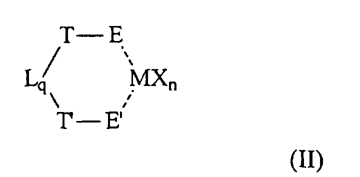 dans laquelle
M est le métal de transition,
E et E' sont des groupements donneurs contenant un atome du groupe 15; E et E' peuvent être différents ou identiques,
L est un groupement donneur contenant un atome des groupes 14 à 16 ou un noyau aromatique hydrocarboné; L peut être différent de ou identique à E et/ou E',
T et T' représentent de façon indépendante, des ponts saturés ou insaturés contenant des éléments des groupes 14 à 16,
X représente un atome d'halogène, un alkoxyde, un aryloxyde, une amine, une phosphine, un hydrure, un groupement hydrocarbyl, éventuellement substitué et/ou halogéné, ou un groupement donneur neutre qui stabilise le complexe, n est 2 ou 3,
q est 1 ou 0.

Le complexe catalytique (a) mis en oeuvre dans la présente invention peut éventuellement être complexé par un groupement donneur neutre.

Des exemples de tels complexes catalytiques ont notamment été décrits dans la demande de brevet WO 96/23010.

Les complexes catalytiques (a) ayant donné de bons résultats sont ceux répondant à la formule générale (III) 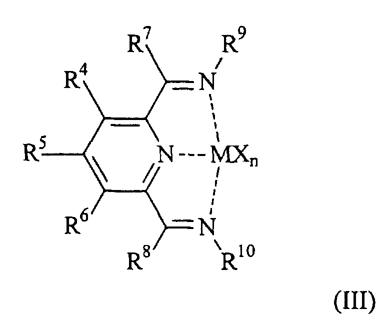 dans laquelle
R⁴, R⁵ et R⁶ représentent chacun, de manière indépendante, un atome d'hydrogène, un groupement hydrocarbyl, un groupement hydrocarbyl substitué ou un groupement fonctionnel inerte,
R⁷ et R⁸ représentent chacun, de manière indépendante, un atome d'hydrogène, un groupement hydrocarbyl, un groupement hydrocarbyl substitué ou un groupement fonctionnel inerte,
R⁹ et R¹⁰ représentent chacun, de manière indépendante, un groupement aryle ou un groupement aryle substitué.

Les complexes catalytiques préférés sont ceux représentés par la formule (III) dans laquelle
R⁹ répond à la formule 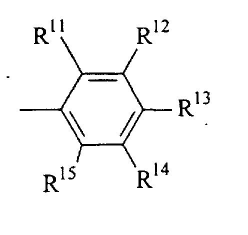
et R¹⁰ répond à la formule 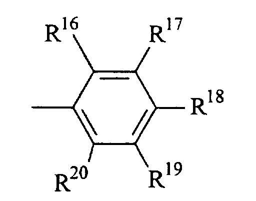 dans lesquelles
   R¹¹ et R¹⁶ représentent chacun, de manière indépendante, un groupe hydrocarbyl, un groupe hydrocarbyl substitué ou un groupe fonctionnel inerte,
   R¹², R¹³, R¹⁴, R¹⁷, R¹⁸ et R¹⁹ représentent chacun, de manière indépendante, un atome d'hydrogène, un groupe hydrocarbyl, un groupe hydrocarbyl substitué ou un groupe fonctionnel inerte,
   R¹⁵ et R²⁰ représentent chacun, de manière indépendante, un atome d'hydrogène, un groupe hydrocarbyl, un groupe hydrocarbyl substitué ou un groupe fonctionnel inerte,
   les groupes R¹¹, R¹², R¹³, R¹⁴, R¹⁵, R¹⁶, R¹⁷, R¹⁸, R¹⁹ et R²⁰ qui sont adjacents pouvant être reliés l'un à l'autre de manière à former un cycle.

De tels complexes catalytiques ont été décrits par exemple dans la demande de brevet WO 98/27124.

De bons résultats ont été obtenus avec des complexes catalytiques (a) répondant à la formule (III) dans laquelle
- M était un atome de Fe,
- X était un atome d'halogène,
- les groupes R⁴, R⁵ et R⁶ sont des atomes d'hydrogène,
- les groupes R⁷ et R⁸ sont chacun, de manière indépendante, un atome d'hydrogène ou un groupe alkyle comprenant de 1 à 6 atomes de carbone,
- R⁹ était un groupe aryle de formule 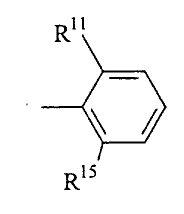 et R¹⁰ était un groupe aryle de formule 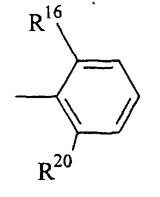
dans lesquelles R¹¹ et R¹⁶ étaient un groupe alkyle comprenant au plus 4 atomes de carbone,
et R¹⁵ et R²⁰ étaient un hydrogène ou un groupement alkyle comprenant au plus 4 atomes de carbone.

Le système catalytique contient également un aluminoxane (b). Par aluminoxanes, on entend désigner les composés répondant aux formules R²¹-(Al R²¹O)ₘ-AlR²¹₂ et (- AlR²¹O)ₘ₊₂ dans lesquelles m est un nombre de 1 à 40 et R²¹ est un groupe alkyle ou aryle contenant de 1 à 12 atomes de carbone. Les composés préférés sont choisis parmi les méthyl-, les éthyl-, les isobutylaluminoxanes et leurs mélanges, et plus particulièrement parmi ceux dans lesquels m est un nombre de 2 à 20. Tout particulièrement préféré est le méthylaluminoxane dans lequel m est un nombre de 10 à 18.

Les aluminoxanes sont connus et ont notamment été décrits dans « Metallocene-based polyolefins », tome 1, 1999, J. Scheirs et J. Kaminsky, p. 33 à 67. Les aluminoxanes commerciaux se présentent généralement sous forme d'une solution, le plus souvent dans un solvant aromatique, tel que le toluène. Les aluminoxanes commerciaux peuvent contenir une certaine quantité de trialkylaluminium. La quantité de trialkylaluminium présente dans les aluminoxanes commerciaux est généralement inférieure à 50 %, le plus souvent inférieure à 30 %, molaire d'aluminium par rapport à la quantité totale d'aluminium y présent.

La quantité d'aluminoxane (b) mise en oeuvre dans le procédé selon l'invention est en général telle que le rapport atomique entre l'aluminium provenant de l'aluminoxane (b) et le métal de transition (M) provenant du complexe catalytique (a) est de 10 à 20000. De préférence, ce rapport est d'au moins 50, plus particulièrement d'au moins 100. On obtient de bons résultats lorsque ce rapport est d'au moins 500. Le plus souvent, la quantité d'aluminoxane mise en oeuvre est telle que le rapport atomique entre l'aluminium provenant de l'aluminoxane (b) et le métal de transition (M) est d'au plus 10000. Des rapports d'environ 1000 à 6000 donnent des résultats particulièrement bons. Dans le cadre de la présente invention, on entend désigner par l'aluminium provenant de l'aluminoxane, la quantité totale d'aluminium présent dans l'aluminoxane mis en oeuvre. Au cas où l'aluminoxane comprend une quantité d'alkylaluminium, l'aluminium peut dès lors provenir aussi bien du composé aluminoxane lui-même que du trialkylaluminium y présent.

Le système catalytique contient une boroxine (c) de formule (I). Les boroxines sont habituellement choisies parmi celles répondant à la formule (I) 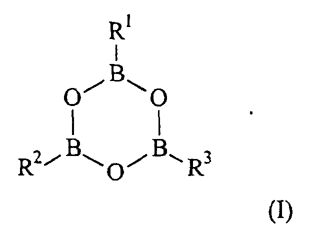 dans laquelle R¹ à R³ représentent chacun, de manière indépendante,
- un groupe alkyle comprenant de 1 à 10 atomes de carbone, éventuellement substitué par un halogène, un groupe aryle comprenant de 6 à 15 atomes de carbone ou un groupe alkoxy comprenant de 1 à 10 atomes de carbone,
- un groupe cycloalkyle comprenant de 4 à 7 atomes de carbone, éventuellement substitué par un halogène, un groupe alkyle comprenant de 1 à 10 atomes de carbone ou un groupe alkoxy comprenant de 1 à 10 atomes de carbone,
- un groupe alkoxy comprenant de 1 à 10 atomes de carbone, éventuellement substitué par un halogène, un groupe aryle comprenant de 6 à 15 atomes de carbone ou un groupe alkyle comprenant de 1 à 10 atomes de carbone, ou
- un groupe aryle comprenant de 6 à 15 atomes de carbone, éventuellement substitué par un halogène, un groupe alkyle comprenant de 1 à 10 atomes de carbone ou un groupe alkoxy comprenant de 1 à 10 atomes de carbone.

Les boroxines sont préférentiellement choisies parmi celles répondant à la formule (I) dans laquelle R¹, R² et R³ sont chacun, de manière indépendante, un groupe alkyle ou alkoxy comprenant de 1 à 4 atomes de carbone. Les trialkylboroxines répondant à la formule générale (I) dans laquelle R¹, R² et R³ sont identiques et représentent un groupe alkyle comprenant de 1 à 4 atomes de carbone sont particulièrement préférées. De bons résultats sont obtenus avec la triméthylboroxine.

La quantité de boroxine (c) mise en oeuvre dans le procédé selon l'invention est en général telle que le rapport atomique entre le bore provenant de la boroxine (c) et l'aluminium provenant de l'aluminoxane (b) est de 0,1 à 1,2. De préférence ce rapport est d'au moins 0,12, plus particulièrement d'au moins 0,15. On obtient de bons résultats lorsque ce rapport est d'au moins 0,2. Le plus souvent, le rapport atomique entre le bore provenant de la boroxine (c) et l'aluminium provenant de l'aluminoxane (b) est d'au plus 1, et plus particulièrement d'au plus 0,6. Des résultats particulièrement bons sont obtenus lorsque ce rapport est d'environ 0,3.

Dans le procédé selon l'invention, le système catalytique peut être préparé avant de le mettre en contact avec l'alpha-oléfine. Selon une variante avantageuse du procédé selon l'invention, le système catalytique est préparé en prémélangeant d'abord l'aluminoxane (b) avec la boroxine (c), puis en y ajoutant le complexe catalytique (a). Dans ce cas, le prémélange est effectué de préférence en ajoutant la boroxine (c) pure ou en solution, à l'aluminoxane (a) qui se présente généralement sous forme d'une solution. La durée du prémélange de l'aluminoxane (b) et de la boroxine (c) n'est pas critique et peut varier de quelques minutes à plusieurs heures. En variante, seulement une partie de l'aluminoxane (b) peut être utilisée pour effectuer le prémélange avec la boroxine (c); l'autre partie de l'aluminoxane (b) peut être introduite directement dans le réacteur de polymérisation, optionnellement en présence de l'alpha-oléfine.

Selon une autre variante du procédé selon l'invention, l'aluminoxane (b) est d'abord mélangé avec la boroxine (c), ensuite ce prémélange est mis en contact avec l'alpha-oléfine dans le réacteur de polymérisation et puis le complexe catalytique (a) est ajouté.

Le procédé de polymérisation selon l'invention peut être réalisé en continu ou en discontinu, selon n'importe quel procédé connu, notamment en solution ou en suspension dans un diluant hydrocarboné, en suspension dans le monomère, ou un des monomères, maintenu à l'état liquide ou encore en phase gazeuse.

Optionnellement, le procédé de polymérisation selon l'invention peut être effectué en présence d'un ou plusieurs agents de réglage de la masse moléculaire des polyoléfines tels que l'hydrogène. Le procédé selon l'invention peut également être effectué en ajoutant un ou plusieurs agents anti-croûtage et/ou un ou plusieurs agents capteurs de poison tels que les dérivés organiques de lithium, magnésium, zinc, aluminium ou étain.

La température à laquelle est effectué le procédé de polymérisation selon l'invention est généralement de -50 °C à + 300 °C, le plus souvent de 0 à 130 °C. La température de polymérisation est de préférence d'au moins 30 °C. De manière préférée, elle ne dépasse pas 115 °C.

La pression totale à laquelle est effectué le procédé selon l'invention est en général choisie entre la pression atmosphérique et 100 10⁵ Pa, plus particulièrement entre 1 10⁵ et 55 10⁵ Pa.

Le procédé de polymérisation selon l'invention est avantageusement appliqué à la fabrication de polymères d'éthylène, et plus particulièrement, à la fabrication d' homo- et de copolymères de l'éthylène comprenant au moins 90 moles % d'unités dérivées de l'éthylène. Les copolymères préférés sont ceux de l'éthylène et d'une autre alpha-oléfine comprenant de 3 à 8 atomes de carbone. Particulièrement préférés sont les copolymères de l'éthylène et du 1-butène et/ou du 1-hexène. Dans ce cas, le procédé de polymérisation est de préférence réalisé en suspension dans un diluant hydrocarboné. Le diluant hydrocarboné est généralement choisi parmi les hydrocarbures aliphatiques contenant de 3 à 10 atomes de carbone. De préférence, le diluant est choisi parmi le propane, l'isobutane, l'hexane ou leurs mélanges.

Le procédé selon l'invention permet d'obtenir des polymères d'alpha-oléfines ne comprenant qu'une faible fraction de polymère de faible masse moléculaire. Le procédé selon l'invention permet l'obtention de polymères possédant une masse moléculaire moyenne plus élevée et une distribution des masses moléculaires plus étroite. Le procédé selon l'invention donne lieu à des polymères d'alpha-oléfines ayant une teneur en oligomères (masse moléculaire moyenne en poids < 5000 daltons) et un taux de solubles inférieurs à ceux obtenus au moyen d'un système catalytique ne comprenant pas de boroxine (c) de formule (I).

Les exemples suivants servent à illustrer l'invention. Les méthodes de mesure des grandeurs mentionnées dans les exemples, les unités exprimant ces grandeurs et la signification des symboles utilisés dans ces exemples sont explicitées ci-dessous.

Les masses moléculaires moyennes en poids (M_{w}) et en nombre (Mₙ) sont obtenues par chromatographie d'exclusion stérique à partir d'une solution de polymère dans le trichlorobenzène à 0,5 g/l, au moyen d'une colonne polystyrénique telle que la colonne Waters Styragel® HMW 6E commercialisée par Waters Co Ltd. On obtient par intégration des pics du chromatogramme le pourcentage en poids que représente la fraction ayant une valeur de M_{w} inférieure à 5000 daltons par rapport à la fraction principale ayant une valeur de M_{w} supérieure à 5000 daltons (Pic<5000/pic principal).

La distribution des masses moléculaires (DPM) est caractérisée par le rapport de la masse moléculaire moyenne en poids à la masse moléculaire moyenne en nombre.

La productivité (Prod) est la quantité de polymère formée lors des essais de polymérisation et est exprimée en kg de polymère par mole de métal de transition mis en oeuvre.

### Exemple 1

### A. Préparation d'un prémélange de méthylaluminoxane et de triméthylboroxine

Une solution de méthylaluminoxane a été préparée en ajoutant 2 ml d'une solution comprenant 10% en poids de méthylaluminoxane (qualité Eurecene® T 5010 vendue par la société Witco) à 10 ml de toluène sec. A cette solution ont été ajoutés, sous agitation, 0,23 ml d'une solution de triméthylboroxine obtenue en mélangeant 1 ml de triméthylboroxine (vendue par Aldrich) et 9 ml de toluène. Le mélange ainsi obtenu a été agité à température ambiante pendant 30 minutes avant son utilisation ultérieure.

### B. Polymérisation de l'éthylène

Dans un autoclave de 1 litre, préalablement conditionné sous azote, ont été ajoutés 300 ml de toluène. L'autoclave est alors porté à la température de polymérisation (30°C) et tiré sous vide durant 5 minutes afin de retirer l'azote. On y ajoute ensuite l'éthylène jusqu'à obtenir une pression de 5 10⁵ Pa. Le mélange préparé à l'étape A a été introduit dans le réacteur. Le mélange réactionnel est ensuite agité pendant 10 minutes avant de démarrer la polymérisation par l'introduction, via le canon, de 7,8 x10⁻⁴ mmole du complexe catalytique suivant 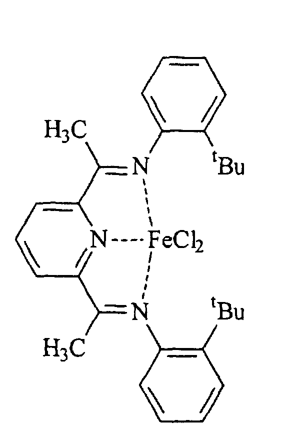 La température et la pression dans l'autoclave ont été maintenues constantes pendant une heure. Après une heure, la polymérisation a été arrêtée par dégazage de l'éthylène. Le contenu du réacteur a été vidé dans un becher contenant 100 ml d'éthanol. Dans le réacteur, 300 ml de toluène ont été ajoutés et agités pendant 2 heures à 100°C sous 5 10⁵ Pa d'azote afin d'y dissoudre le polymère restant (croûtage) dans le réacteur. Ce toluène a alors été ajouté au même becher. Un large excès d'éthanol et 5 ml d'HCl concentré dilué dans 50 ml d'eau ont été ajoutés dans le becher contenant les 600 ml de toluène, afin d'y précipiter le polymère et de détruire le catalyseur et le cocatalyseur présent. Le polymère précipité a été filtré et séché jusqu'à l'obtention d'un poids constant.

Les résultats obtenus sont présentés dans le tableau ci-dessous.

### Exemples 2 et 3

Les opérations de l'exemple 1 ont été répétées sauf que les quantités de triméthylboroxine mises en oeuvre à l'étape A ont été modifiées pour atteindre des rapports atomiques B/Al différents.

Les résultats obtenus se trouvent dans le tableau ci-dessous.

### Exemple 4R (non conforme à l'invention)

Les opérations de l'exemple 1 ont été répétées sauf que l'ajout de triméthylboroxine a été omis de façon à obtenir un système catalytique ne comprenant pas de boroxine.

Les résultats obtenus se trouvent dans le tableau ci-dessous.

La comparaison des exemples 1 à 3 avec l'exemple comparatif 4R montre que le procédé selon l'invention mettant en oeuvre un système catalytique comprenant une boroxine permet d'obtenir des polyéthylènes ayant une masse moléculaire M_{w} plus élevée et contenant moins, voire pas du tout, de fraction de faible masse moléculaire, par rapport à un système catalytique ne comprenant pas de boroxine.

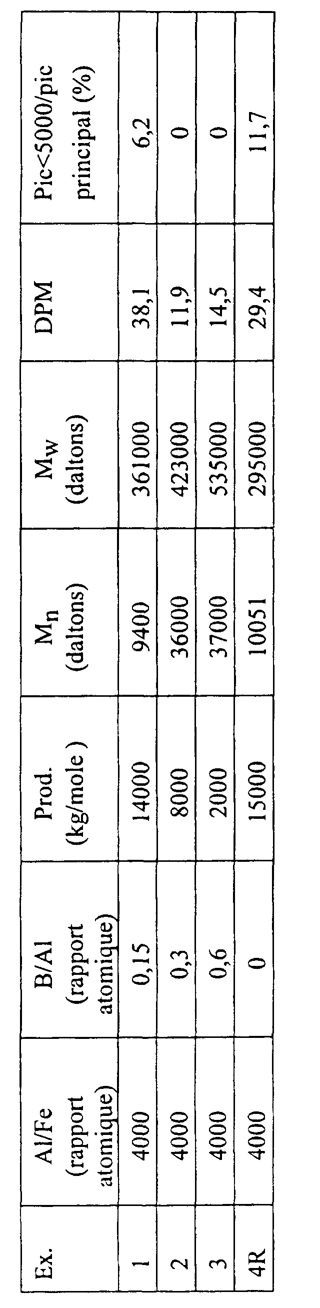

## Revendications

1. Procédé de polymérisation d'alpha-oléfines selon lequel on met en contact, dans des conditions polymérisantes, au moins une alpha-oléfine avec un système catalytique comprenant
(a) un complexe catalytique à base d'un métal de transition (M) des groupes 6 à 12,
(b) un aluminoxane, et
(c) une boroxine représentée par la formule (I) 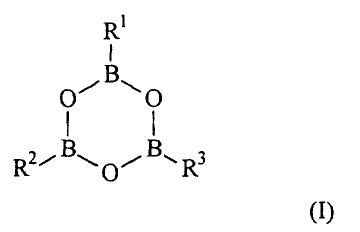
dans laquelle R¹ à R³ représentent chacun, de manière indépendante, un groupe alkyle, cycloalkyle, alkoxy, ou aryle, éventuellement substitué.

2. Procédé selon la revendication 1, dans lequel le complexe catalytique répond à la formule générale (III) 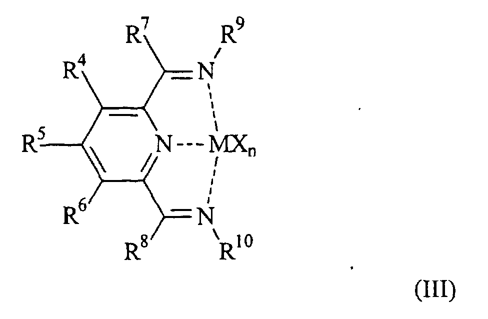 dans laquelle
M est le métal de transition,
X représente un atome d'halogène, un alkoxyde, un aryloxyde, une amine, une phosphine, un hydrure, un groupement hydrocarbyl, éventuellement substitué et/ou halogéné, ou un groupement donneur neutre qui stabilise le complexe, n est 2 ou 3,
R⁴,R⁵ et R⁶ représentent chacun, de manière indépendante, un atome d'hydrogène, un groupement hydrocarbyl, un groupement hydrocarbyl substitué ou un groupement fonctionnel inerte,
R⁷ et R⁸ représentent chacun, de manière indépendante, un atome d'hydrogène, un groupement hydrocarbyl, un groupement hydrocarbyl substitué ou un groupement fonctionnel inerte,
R⁹ et R¹⁰ représentent chacun, de manière indépendante, un groupement aryle ou un groupement aryle substitué.

3. Procédé selon la revendication 2, dans lequel le complexe catalytique répond à la formule (III) dans laquelle
R⁹ est un groupement aryle de formule générale 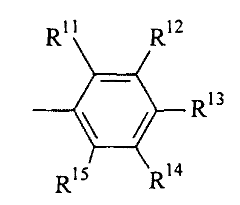
et R¹⁰ est un groupement aryle de formule générale 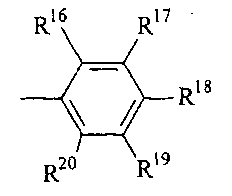 dans lesquelles
R¹¹ et R¹⁶ représentent chacun, de manière indépendante, un groupe hydrocarbyl, un groupe hydrocarbyl substitué ou un groupe fonctionnel inerte,
R¹², R¹³, R¹⁴, R¹⁷, R¹⁸ et R¹⁹ représentent chacun, de manière indépendante, un atome d'hydrogène, un groupe hydrocarbyl, un groupe hydrocarbyl substitué ou un groupe fonctionnel inerte,
R¹⁵ et R²⁰ représentent chacun, de manière indépendante, un atome d'hydrogène, un groupe hydrocarbyl, un groupe hydrocarbyl substitué ou un groupe fonctionnel inerte,
les groupes R¹¹, R¹², R¹³, R¹⁴, R¹⁵, R¹⁶, R¹⁷, R¹⁸, R¹⁹ et R²⁰ qui sont adjacents peuvent être reliés l'un à l'autre de manière à former un cycle.

4. Procédé selon la revendication 3, dans lequel le complexe catalytique répond à la formule (III) dans laquelle
M est un atome de Fe,
X est un atome d'halogène,
les groupes R⁴, R⁵ et R⁶ sont des atomes d'hydrogène,
les groupes R⁷ et R⁸ sont chacun, de manière indépendante, un atome d'hydrogène ou un groupe alkyle comprenant de 1 à 6 atomes de carbone,
R⁹ est un groupe aryle de formule 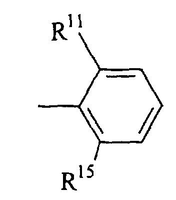
et R¹⁰ est un groupe aryle de formule 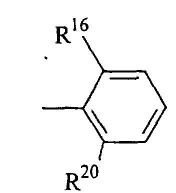
dans lesquelles R¹¹ et R¹⁶ sont un groupe alkyle comprenant au plus 4 atomes de carbone,
et R¹⁵ et R²⁰ sont un atome d'hydrogène ou un groupement alkyle comprenant au plus 4 atomes de carbone.

5. Procédé selon l'une quelconque des revendications 1 à 3, dans lequel le métal de transition (M) est le Fe.

6. Procédé selon l'une quelconque des revendications 1 à 5, dans lequel l'aluminoxane (b) est choisi parmi les méthyl-, les éthyl-, les isobutylaluminoxanes et leurs mélanges.

7. Procédé selon l'une quelconque des revendications 1 à 6, dans lequel la boroxine (c) est choisie parmi les boroxines répondant à la formule (I) dans laquelle les groupes R¹,R² et R³ sont chacun, de manière indépendante, un groupe alkyle ou alkoxy comprenant de 1 à 4 atomes de carbone.

8. Procédé selon la revendication 7, dans lequel la boroxine (c) est la triméthylboroxine.

9. Procédé selon l'une quelconque des revendications 1 à 8, dans lequel le rapport atomique du bore provenant de la boroxine (c) à l'aluminium provenant de l'aluminoxane (b) est de 0,1 à 1,2.

10. Procédé selon l'une quelconque des revendications 1 à 9, dans lequel le rapport atomique de l'aluminium provenant de l'aluminoxane (b) au métal de transition (M) provenant du complexe catalytique (a) est de 10 à 20000.

11. Procédé selon l'une quelconque des revendications 1 à 10, dans lequel la polymérisation est effectuée à une température de -50 à 300 °C et sous une pression de 1 à 100 10⁵Pa.

12. Procédé selon l'une quelconque des revendications 1 à 11, appliqué à la fabrication de homo- ou de copolymères de l'éthylène comprenant au moins 90 moles % d'unités dérivées de l'éthylène.
